# FASCICULE DE BREVET EUROPEEN

(11) **EP 2 046 509 B1**
(45) Date de publication et mention de la délivrance du brevet: **03.08.2011**
(21) Numéro de dépôt: 06721182.1
(22) Date de dépôt: 19.04.2006
(51) Int. Cl.: B08B 3/02, B08B 11/02

(54) **UNITE DE LAVAGE POUR UNE MACHINE DE NETTOYAGE DE VERRES OPHTALMIQUES OU AUTRES SUBSTRATS**
WASCHVORRICHTUNG ZUR REINIGUNG OPTISCHER LINSEN ODER ANDERER SUBSTRATE
WASHING APPLIANCE FOR CLEANING OPTICAL LENSES OR OTHER SUBSTRATES

(30) Priorité: 19.04.2005 EP 05008558
(43) Date de publication de la demande: 15.04.2009
(73) Titulaire: Special Coating Laboratory International, 74160 Archamps (FR)
(72) Inventeur: GHERIG, Jean, F-74580 Viry (FR); GHERIG, Denis, F-74160 Saint Julien en Genevois (FR)
(74) Mandataire: Verriest, Philippe
(86) Numéro de dépôt international: PCT/EP2006/003576
(87) Numéro de publication internationale: WO 2006/111364

(56) Documents cités:
- EP-A1- 1 428 585
- EP-A2- 0 483 034
- DE-A1- 10 318 021
- FR-A- 2 690 635
- US-A- 4 027 686
- US-A- 4 784 167
- US-A- 5 143 101
- US-B1- 6 301 930
- PATENT ABSTRACTS OF JAPAN vol. 1997, no. 07, 31 juillet 1997 (1997-07-31) -& JP 09 057184 A (SEIKO EPSON CORP), 4 mars 1997 (1997-03-04)

## Description

La présente invention a pour objet une unité de lavage pour machine de nettoyage de verres ophtalmiques ou autres substrats.

On utilise actuellement pour nettoyer les verres ophtalmiques des procédés manuels ou automatiques à l'aide de brosses rotatives qui se présentent sous la forme d'unités de lavage montées sur un châssis dans une machine susceptible de stocker une quantité de verres à nettoyer et de les acheminer vers les différentes unités de lavage et de séchage à l'aide de moyens de transport.

Toutefois, le passage des poils des brosses de lavage sur les surfaces concaves et convexes des verres ophtalmiques à nettoyer occasionne de nombreuses rayures et plus particulièrement lorsqu'ils sont au contact de verres organiques réalisés à partir de résines thermodurcissables.

Une solution au brossage est décrite dans le document US 4 784 167 A. Celui-ci décrit une unité de lavage comportant au moins deux buses montées en opposition de part et d'autre du verre à nettoyer sur deux rampes de lavage émettant chacune un jet haute pression venant balayer simultanément les surfaces concave et convexe du verre.

La présente invention a pour but de remédier à.ces inconvénients en proposant une unité de lavage pour machine de nettoyage de verres ophtalmiques permettant d'améliorer la productivité de lavage desdits verres et de nettoyer leurs surfaces concaves et convexes avec une grande efficacité sans les rayer.

Une unité de lavage pour machine de nettoyage de verres ophtalmiques selon la présente invention comprend d'une part deux rampes de lavage susceptibles d'émettre chacune un jet de liquide de lavage sous haute pression , lesdites rampes étant parallèles et montées en opposition de part et d'autre du verre à nettoyer de manière que les jets viennent au contact respectivement des surfaces concave et convexe dudit verre et d'autre part des moyens de maintien destinés à tenir le verre durant l'opération de lavage et des moyens permettant de déplacer lesdites rampes ou le verre de manière à réaliser un balayage simultané des surfaces concaves jets et convexes du verre par les jets de liquide de lavage respectifs caractérisée en ce que les jets se présentent sous la forme d'une lame évasée de largeur sensiblement égale ou supérieure au diamètre du verre à nettoyer, les deux lames de liquide étant situées dans le même plan et en ce que lesdits moyens de maintien sont destinés à tenir le verre durant l'opération de lavage en état de stabilité.

Dans un mode de réalisation préférentielle de la présente invention le jet de liquide de lavage provenant de chaque rampe sera obtenu par la résultante de plusieurs jets de liquide en forme de lame évasée projetés par des buses de pulvérisation disposées sur une même ligne et espacées régulièrement avec un intervalle entre les buses de pulvérisation déterminé de manière que les lames de liquide se chevauchent au contact du verre pour obtenir une seule lame de liquide de largeur sensiblement égale ou supérieure au diamètre de la surface concave ou convexe du verre à nettoyer.

Les rampes seront mobiles simultanément en rotation ou en translation dans un plan parallèle au verre à nettoyer et seront par exemple solidarisées perpendiculairement à un mat vertical monté en rotation autour de son axe.

Dans un mode de réalisation préférentielle de l'invention chaque rampe comportera une chambre de distribution du liquide de lavage sous haute pression et le mat vertical comportera un canal d'amenée du liquide de lavage sous haute pression débouchant dans lesdites chambres de distribution.

Le verre sera maintenu horizontalement en position fixe de lavage entre les deux rampes à l'aide d'une pince de serrage comprenant deux mâchoires susceptibles d'être écartées ou rapprochées l'une de l'autre pour assujettir solidement le verre durant son lavage. La mâchoire de serrage d'un verre pourra être constituée d'un bras de levier muni à l'une de ses extrémités d'un étrier réalisé à partir d'une plaque métallique pliée en forme de U tandis qu'une encoche en V sera pratiqué dans le côté d'extrémité de chaque branche dudit U pour recevoir le bord du verre 1. Le bord des encoches sera avantageusement découpé en dents de scie de manière à améliorer le blocage du bord du verre dans lesdites encoches.

Ainsi le verre sera tenu fixement par la tenaille pendant l'opération de nettoyage et les forces opposées exercées simultanément sur les deux faces concave et convexe du verre par les deux lames de liquide en vis-à-vis renforceront l'état de stabilité du verre et l'empêcheront d'être éjecté de la pince ou d'être brisé sous la force du liquide sous haute pression.

Les avantages et les caractéristiques de la présente invention ressortiront plus clairement de la description qui suit et qui se rapportent au dessin annexé, lequel en représente un mode de réalisation non limitatif.
- la figure la représente une vue de profil d'une unité de lavage d'un verre ophtalmique selon la présente invention
- la figure 1b représente une vue aérienne de l'unité de lavage selon la présente invention
- la figure 1c représente une vue en coupe transversale de l'unité de lavage selon la présente invention
- La figure 2 représente une vue de profil d'une pince de serrage pour le maintien du verre dans une unité de lavage selon la présente invention
- la figure 3a représente une vue latérale d'un étrier de serrage pour la saisie du verre par la pince de serrage dans l'unité de lavage selon la présente invention
- la figure 3b représente une vue de dessous de d'un étrier de serrage
- la figure 3c représente une vue de profil de d'un étrier de serrage
- la figure 3d représente une vue de détail du bord de contact d'une encoche en V d'un étrier de serrage

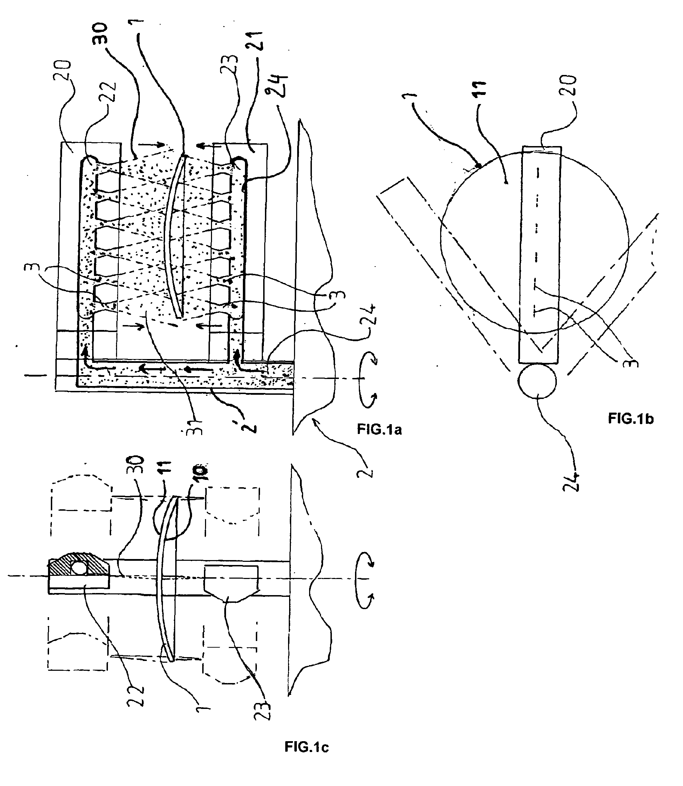

Si on se réfère aux figures 1a, 1b, 1c on peut voir qu'une unité de lavage d'un verre ophtalmique 1 selon la présente invention est constituée d'une potence 2 comprenant un mat vertical 2' portant deux bras horizontaux supérieure 20 et inférieure 21 situés en vis-à-vis et supportant chacun respectivement une rampe 22,23 de pulvérisation projetant un liquide de lavage 24 sous haute pression en forme de lame évasée sur le verre ophtalmique 1 positionné horizontalement entre les deux rampes de pulvérisation 22 et 23.

Chaque rampe 22,23 comporte une rangée de buses de pulvérisation 3 projetant des jets de liquide 30 sous haute pression en forme de lame évasée et a pour fonction de laver respectivement l'une des faces concave 10 ou convexe 11 d'un verre 1 à nettoyer.

Le mat vertical 2' de la potence 2 de l'unité de lavage est monté en rotation autour de son axe de manière à pouvoir déplacer angulairement et simultanément les deux rampes 22,23 dans un plan horizontal parallèle à celui du verre à nettoyer.

Le nombre et l'écartement entre les buses de pulvérisation 3 est défini de manière à obtenir un faisceau de lames de liquide 30 se recouvrant au niveau de la surface concave 10 ou convexe 11 correspondante du verre 1 en formant un rideau d'eau résultant de la juxtaposition des lames de liquides 30 et d'une largeur sensiblement égale ou supérieure au diamètre du verre 1 qui est situé à une distance appropriée des buses 3 en fonction des paramètres de pression et de vitesse des lames de liquide 30.

Ainsi, le nettoyage des faces concave 10 et convexe 11 du verre 1 est réalisé en déplaçant angulairement les rampes 22,23, mobiles en rotation autour de l'axe du mat 2 vertical, ce qui a pour effet de déplacer simultanément les deux rideaux 31 opposés de lames de liquide de lavage 30 et de balayer toute la surface des deux faces concave 10 et convexe 11 respectives du verre 1.

Des essais ont montrés que pour éliminer toute pollution à la surface d'un verre ophtalmique le liquide de lavage projeté à la sortie de chaque buse de pulvérisation 3 devrait atteindre la surface du verre sous une pression de 8 à 30 bars et une vitesse de l'ordre de 200 km/H imposant un débit élevé de l'ordre de 30 à 50 l/minute.

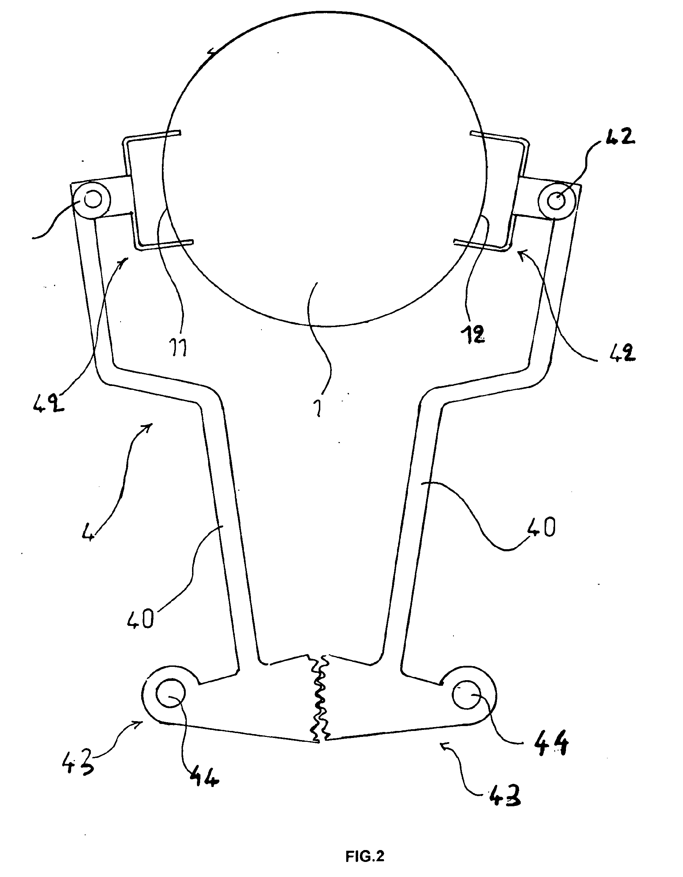

Le verre 1 est maintenu horizontalement en position fixe de lavage entre les deux rampes 22,23 à l'aide d'une pince de serrage 4 que l'on peut voir sur la figure 2 comprenant deux mâchoires 40 qui peuvent être rapprochées pour assujettir solidement le verre 1 durant son lavage par son bord périphérique 12.

Une mâchoire 40 de serrage d'un verre 1 est constituée d'un bras de levier 41 muni à l'une de ses extrémités d'un étrier 42 et à son autre extrémité d'une patte 43 susceptible d'être montée en rotation autour d'un axe 44 et d'être articulée par engrenage à la patte 43 de l'autre bras 41 de manière à permettre le pivotement des deux bras 41 l'un par rapport à l'autre pour écarter ou rapprocher les étriers 42 en vue du maintien d'un verre 1 quelque soit son diamètre. Les étriers 42 sont réglables angulairement en étant montés pivotant autour d'un axe 42' permettant d'adapter le serrage du verre 1 en fonction de son diamètre.

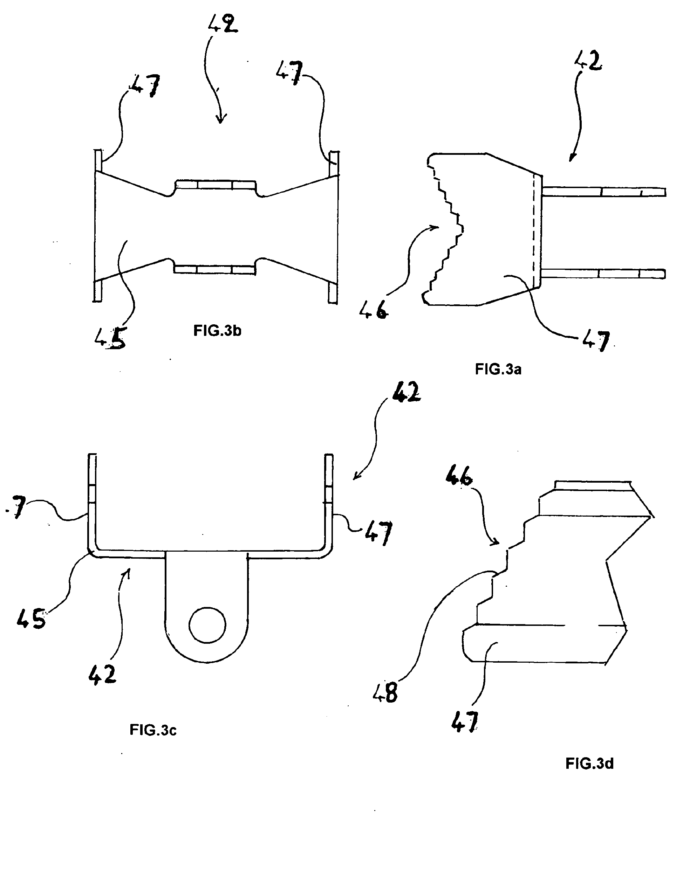

Les figures 3a, 3b, 3c et 3d montrent qu'un étrier 42 est réalisé à partir d'une plaque métallique 45 pliée en forme de U et qu'une encoche en V 46 est pratiquée dans le côté d'extrémité de chaque branche 47 du U pour recevoir le bord périphérique 12 du verre 1. La figure 3a montre que le bord des encoches 46 est découpé en dents de scie 48 de manière à renforcer le blocage du bord du verre 1 dans les encoches 46.

Les forces antagonistes créées par le contact des deux faisceaux de lames de liquide opposés selon la présente invention sur les deux faces concave et convexe d'un verre ophtalmique permettent par un équilibre des forces de renforcer la stabilité du verre et d'éviter que celui-ci qui est maintenu par la pince de serrage ne se soit éjecté de cette dernière ou ne se brise sous la pression et la vitesse élevées des jets de lavage.

## Revendications

1. Unité de lavage pour machine de nettoyage de verres ophtalmiques (1) ou autres substrats comprenant d'une part deux rampes de lavage (22,23) susceptibles d'émettre chacune un jet de liquide de lavage (30) sous haute pression, lesdites rampes (22,23) étant parallèles et montées en opposition de part et d'autre du verre (1) à nettoyer de manière que les jets viennent au contact respectivement des surfaces concave (10) et convexe (11) dudit verre (1) et d'autre part des moyens de maintien (4) destinés à tenir le verre (1) durant l'opération de lavage et des moyens (2') permettant de déplacer lesdites rampes (22,23) ou le verre (1) de manière à réaliser un balayage simultané des surfaces concaves (10) et convexes (11) du verre (1) par les jets de liquide de lavage (30) respectifs **caractérisée en ce que** les jets se présentent sous la forme d'une lame évasée de largeur sensiblement égale ou supérieure au diamètre du verre à nettoyer, les deux lames de liquide (30) étant situées dans le même plan et **en ce que** lesdits moyens de maintien (4) sont destinés à tenir le verre (1) durant l'opération de lavage en état de stabilité.

2. Unité de lavage selon la revendication 1 **caractérisée en ce que** le jet de liquide de lavage (30) provenant de chaque rampe (22,23) est obtenu par la résultante de plusieurs jets de liquide (30') en forme de lame évasée projetés par des buses de pulvérisation (3) disposées sur une même ligne et espacées régulièrement avec un intervalle entre les buses de pulvérisation (3) déterminé de manière que les lames de liquide (30') se chevauchent au contact du verre (1) pour obtenir une seule lame de liquide (30) de largeur sensiblement égale ou supérieure au diamètre de la surface concave (10) ou convexe (11) du verre (1) à nettoyer.

3. Unité de lavage selon la revendication 1 ou la revendication 2 **caractérisée en ce que** les rampes (22,23) sont mobiles simultanément en rotation ou en translation dans un plan parallèle au verre (1) à nettoyer.

4. Unité de lavage selon la revendication 3 **caractérisée en ce que** les rampes (22,23) sont solidarisées perpendiculairement à un mat vertical (2') monté en rotation autour de son axe.

5. Unité de lavage selon la revendication 4 **caractérisée en ce que** chaque rampe (22,23) comporte une chambre de distribution (24) du liquide de lavage sous haute pression et **en ce que** le mat vertical (2') comporte un canal (25) d'amenée du liquide de lavage sous haute pression débouchant dans lesdites chambres de distribution (24).

6. Unité de lavage selon l'une quelconque des revendications précédentes **caractérisée en ce que** le verre (1) est maintenu horizontalement en position fixe de lavage entre les deux rampes (22,23) à l'aide d'une pince de serrage (4) comprenant deux mâchoires (40) qui peuvent être écartées ou rapprochées pour assujettir solidement le verre 1 durant son lavage.

7. Unité de lavage selon la revendication 6 **caractérisée en ce que** la mâchoire (40) de serrage d'un verre (1) est constituée d'un bras de levier (41) muni à l'une de ses extrémités d'un étrier (42) réalisé à partir d'une plaque métallique (45) pliée en forme de U et **en ce qu'**une encoche en V (46) est pratiquée dans le côté d'extrémité de chaque branche (47) du U pour recevoir le bord dudit verre (1).

8. Unité de lavage selon la revendication 7 **caractérisée en ce que** le bras de levier (41) d'une mâchoire (40) comporte à son autre extrémité une patte (43) susceptible d'être montée en rotation autour d'un axe (44) et d'être articulée à la patte (43) de l'autre bras (41) de manière à permettre le pivotement des deux bras (41) l'un par rapport à l'autre pour écarter ou rapprocher lesdits étriers (42).

9. Unité de lavage selon la revendication 7 ou la revendication 8 **caractérisée en ce que** le bord des encoches (46) est découpé en dents de scie de manière à renforcer le blocage du bord du verre (1) dans lesdites encoches (46).

## Claims

1. A washing appliance for cleaning optical lenses (1) or other substrates, comprising two cleaning rails (22,23) for the high-pressure emission of a jet of cleaning fluid (30), said rails (22,23) being parallel to and opposing on either side of the lens (1) for cleaning such that the two sheets of fluid (30) respectively make contact with the concave (10) and convex (11) surfaces of said lens (1) and with support means (4) to hold the lens (1) in a stable condition during the cleaning operation and means (2') for displacement of said rails (22,23) or the lens (1) such as to give a simultaneous sweeping of the concave (10) and convex (11) surfaces of the lens (1) by the respective sheets of cleaning fluid (30), **characterized in that** the sheets assume the form of a flared blade with a width essentially the same or larger than the diameter of the lens to be cleaned, the two sheets of fluid (30) being in the same plane, and **in that** said support means (4) are intended to hold the lens (1) in a stable condition during the cleaning operation.

2. The washing appliance according to claim 1, **characterized in that** the jet of cleaning fluid (30) coming from each rail (22, 23) is obtained by the result of several fluid sheets (30') in the form of a flared blade projected by spray nozzles (3) positioned on a same line and regularly spaced with a predetermined interval between the spray nozzles (3) so that the blades of fluid (30') overlap in contact with the lens (1) to obtain a single blade of fluid (30) with a width substantially equal to or larger than the diameter of the concave (10) or convex (11) surface of the lens (1) to be cleaned.

3. The washing appliance according to claim 1 or claim 2, **characterized in that** the rails (22, 23) are simultaneously movable in rotation or translation in a plane parallel to the lens (1) to be cleaned.

4. The washing appliance according to claim 3, **characterized in that** the rails (22, 23) are perpendicularly secured to a vertical pylon (2') rotatably mounted around its axis.

5. The washing appliance according to claim 4, **characterized in that** each rail (22, 23) has a distribution channel (24) for the high-pressure cleaning fluid and **in that** the vertical pylon (2') has a high-pressure fluid intake channel (25) emerging in said distribution chambers (24).

6. The washing appliance according to any one of the preceding claims, **characterized in that** the lens (1) is held horizontally in a fixed cleaning position between the two rails (22, 23) using a gripping clamp (4) comprising two jaws (40) that can be moved away or brought closer to securely hold the lens 1 during cleaning thereof.

7. The washing appliance according to claim 6, **characterized in that** the jaw (40) for gripping a lens (1) is made up of a lever arm (41) provided at one of its ends with a stirrup (42) made from a metal plate (45) folded in a U shape and **in that** a V-shaped notch (46) is formed in the end side of each branch (47) of the U to receive the edge of said lens (1).

8. The washing appliance according to claim 7, **characterized in that** the lever arm (41) of a jaw (40) has, at its other end, a lug (43) able to be rotatably mounted around an axis (44) and to be hinged to the lug (43) of the other arm (41) so as to allow the two arms (41) to pivot relative to each other to move them away from or closer to said stirrups (42).

9. The washing appliance according to claim 7 or claim 8, **characterized in that** the edge of the notches (46) is cut into teeth so as to strengthen the locking of the edge of the lens (1) in said notches (46).

## Patentansprüche

1. Waschvorrichtung für eine Reinigungsmaschine für optische Linsen (1) oder andere Gegenstände, die zum einen zwei Waschgalerien (22, 23), die sich zum Abgeben jeweils eines Strahls Waschflüssigkeit (30) unter hohem Druck eignen, wobei diese Waschgalerien (22, 23) parallel und beiderseits gegenüberliegend der zu reinigenden Linse (1) angeordnet sind und diese derart reinigen, dass die Strahlen jeweils mit der konkaven (10) und der konvexen (11) Fläche der Linse (1) in Kontakt gelangen, und zum anderen Festhaltemittel (4), welche die Linse (1) während des Waschvorgangs festhalten, sowie Mittel (2'), mit deren Hilfe die Waschgalerien (22, 23) oder das Glas (1) derart bewegt werden können, dass die konkaven (10) und konvexen (11) Flächen der Linse (1) gleichzeitig durch die jeweiligen Strahlen Waschflüssigkeit (30) bestrichen werden, beinhaltet, **gekennzeichnet dadurch, dass** die Strahlen in Form eines sich am Ende verbreiternden Streifens von einer Breite, welche im wesentlichen gleich oder größer dem Durchmesser der zu reinigenden Linse ist, angeordnet sind, wobei sich die beiden Streifen Waschflüssigkeit (30) in der gleichen Ebene befinden, und wobei die Festhaltemittel (4) dazu bestimmt sind, die Linse (1) während des Waschvorgangs stabil zu halten.

2. Waschvorrichtung nach Anspruch 1 **gekennzeichnet dadurch, dass** der aus jeder Galerie (22, 23) herrührende Strahl Waschflüssigkeit (30) in Form eines sich am Ende verbreiternden Streifens durch das Zusammenwirken mehrerer Strahlen Waschflüssigkeit (30') aus Zerstäuberdüsen (3), die in einer Linie und mit gleichmäßigem Abstand derart angeordnet sind, dass die Streifen Waschlüssigkeit (30') sich im Kontakt mit der Linse (1) überlappen, so dass sich ein einziger Flüssigkeitsstreifen (30) ergibt, dessen Breite im wesentlichen gleich oder größer dem Durchmesser der konkaven (10) oder konvexen (11) Fläche der zu reinigenden Linse (1) ist, entsteht.

3. Waschvorrichtung nach Anspruch 1 oder 2 **gekennzeichnet dadurch, dass** die Waschgalerien (22, 23) in einer Ebene parallel zur zu reinigenden Linse (1) gleichzeitig rotatorisch und translatorisch beweglich sind.

4. Waschvorrichtung nach Anspruch 3 **gekennzeichnet dadurch, dass** die Waschgalerien (22, 23) mit einem vertikalen Mast (2'), welcher um seine eigene Achse dreht, senkrecht zu diesem fest verbunden sind.

5. Waschvorrichtung nach Anspruch 4 **gekennzeichnet dadurch, dass** jede Waschgalerie (22, 23) eine Verteilerkammer (24) für die unter hohem Druck stehende Waschflüssigkeit beinhaltet und **dadurch**, dass der vertikalen Mast (2') einen Kanal (25) zum Leiten der unter hohem Druck stehenden Waschflüssigkeit, der in die Verteilerkammern (24) mündet, beinhaltet.

6. Waschvorrichtung nach einem der vorhergehenden Ansprüche **gekennzeichnet dadurch, dass** die Linse (1) mit Hilfe einer Klemmzange (4), welche zwei Klemmbacken (40), die voneinander weg oder aufeinander zu bewegt werden können, beinhaltet, zwischen den beiden Waschgalerien (22, 23) derart horizontal in einer festen Waschposition gehalten wird, dass die Linse (1) während des Waschvorgangs gut fixiert ist.

7. Waschvorrichtung nach Anspruch 6 **gekennzeichnet dadurch, dass** die Klemmbacke (40) zum Einspannen einer Linse (1) aus einem Hebelarm (41), der an einem seiner Enden mit einem aus einem U-förmig gebogen Metallstück (45) hergestellten Bügel (42) versehen ist, besteht und **dadurch**, dass das Ende jedes Stegs (47) mit einer V-förmigen Kerbe (46) versehen sind, welche die Linse (1) am Rand angreift.

8. Waschvorrichtung nach Anspruch 7 **gekennzeichnet dadurch, dass** der Hebelarm (41) einer Klemmbacke (40) an seinem anderen Ende eine um eine Drehachse (44) drehbaren Zunge (43) beinhaltet, welche mit der Zunge (43) eines anderen Arms (41) derart beweglich in Verbindung steht, dass die Drehbewegungen der beiden Arme (41) um die Achsen gegeneinander möglich sind, um die Bügel (42) aufeinander zu oder voneinander weg zu bewegen.

9. Waschvorrichtung nach Anspruch 7 oder 8 **gekennzeichnet dadurch, dass** die Ränder der Kerben (46) derart sägezahnförmig geformt sind, dass die Haltewirkung auf den Rand der Linse (1) in den Kerben (46) verstärkt wird.
